# EUROPÄISCHE PATENTSCHRIFT

(11) **EP 3 708 045 B1**
(45) Veröffentlichungstag und Bekanntmachung des Hinweises auf die Patenterteilung: **13.11.2024**
(21) Anmeldenummer: 20163005.0
(22) Anmeldetag: 13.03.2020
(51) Int. Cl.: A47J 37/06

(54) **VORRICHTUNG ZUM GRILLEN VON LEBENSMITTELN**
FOOD GRILLING DEVICE
DISPOSITIF POUR GRILLER DES DENRÉES ALIMENTAIRES

(30) Priorität: 13.03.2019 DE 102019106442
(43) Veröffentlichungstag der Anmeldung: 16.09.2020
(73) Patentinhaber: OPUS POWERGRILL GmbH, 27330 Asendorf (DE)
(72) Erfinder: HORN, Ina, 96317 Kronach (DE)
(74) Vertreter: Philipp, Matthias

(56) Entgegenhaltungen:
- EP-A1- 3 443 878
- WO-A1-2011/103621
- FR-A1- 2 947 141
- US-A1- 2017 027 382

## Beschreibung

Die vorliegende Erfindung betrifft eine Vorrichtung zum Grillen von Lebensmitteln.

### Stand der Technik

Aus dem Stand der Technik sind Grillvorrichtungen bekannt, in welche das zu grillende Grillgut in horizontaler Position eingeführt wird. Dies ist beispielsweise bei üblichen Holzofengrills der Fall, wo die Wärmequelle in Form von Holzkohle unterhalb des Grillrost angeordnet ist. Dies hat den Nachteil, dass die Wärmequelle lediglich von unten das Grillgut erwärmt, sodass eine ungleichmäßige Garung resultiert. Gleiches ergibt sich auch bei Elektrogrills, wo das Grillgut in horizontaler Position eingeschoben wird. Hier ist die Wärmequelle oberhalb des Grillguts angeordnet, sodass auch hier lediglich eine einseitige, ungleichmäßige Garung resultiert.

Weiterhin ist ein elektrisch betriebenes Oberhitzegrillgerät aus der DE 20 2018 004 490 U1 bekannt, in welches das zu garende Grillgut horizontal eingeschoben wird. Auch hier ist der Nachteil, dass die Wärmequelle lediglich einseitig, nämlich von oben her auf das Grillgut einwirkt. Zur gleichmäßigen Wärmeverteilung werden mehrere Lüfter eingesetzt, sodass sich die Problematik des Luftstaus innerhalb des Grillraums, bedingt und das Grillgut lediglich von der Oberseite her mit Hitze beaufschlagt wird.

Darüber hinaus offenbart das Dokument US 2017/0027382 A1 eine vertikale Grilleinrichtung, wobei die vertikale Grillanordnung ein Gehäuse mit einem Boden, einer Rückwand, gegenüberliegenden Seitenwänden und einer oberen Platte, die ein Innenvolumen abgrenzt, umfasst. Mehrere Brenner sind auf der Innenfläche jeder gegenüberliegenden Seitenwand angeordnet. Die vertikale Grillanordnung umfasst ferner eine Grillrostanordnung mit einem ersten Grillrost, der über ein bewegliches Scharnier an einem zweiten Grillrost befestigt ist.

Ferner offenbart das Dokument EP 3 443 878 A1 ein faltbares Grillgerät, wobei das Grillgerät eine klappbare Grilleinheit, auf die Grillgut gelegt und gegart wird, in der mehrere Grillplatten gegenseitig auf- und zugeklappt werden können, und eine faltbare Wärmeerzeugungseinheit umfasst, die auf einer Stützsäule angeordnet ist, die vertikal bezüglich der Grilleinheit angeordnet ist, und in der eine Vielzahl von Heizgeräten gegenseitig ausgeklappt oder gefaltet werden kann, während Infrarotstrahlen auf die Grilleinheit angewendet werden.

### Aufgabe

Daher ist es Aufgabe der vorliegenden Erfindung eine Vorrichtung zum Grillen von Grillgut bereitzustellen, welche effizient und zeitsparend ist. Zudem ist es Aufgabe der vorliegenden Erfindung eine gleichmäßige und schnelle (An)garung des Grillguts sicherzustellen.

### Lösung

Diese Aufgabe wird durch eine Grillvorrichtung nach Anspruch 1 gelöst.

Der Kerngedanke der vorliegenden Erfindung besteht darin, eine Vorrichtung zum Grillen von Grillguts bereitzustellen, welche wenigstens ein Gehäuse zur Aufnahme des Grillguts, aufweist, wobei das Gehäuse wenigstens einen Grillraum umspannt, wobei das Gehäuse weiterhin wenigstens zwei Durchgangsöffnungen aufweist und die erste Durchgangsöffnung als Abluftöffnung ausgebildet ist und das Grillgut durch die zweite Durchgangsöffnung dem Grillraum zufuhrbar ist, wobei das Gehäuse wenigstens zwei Wärmequellen zum Erwärmen des Grillguts aufweist, welche im Wesentlichen vertikal angeordnet sind.

Die vorliegende Erfindung kann auch als Grillvorrichtung, vorteilhaft Hochtemperaturgrillvorrichtung, bezeichnet werden, welche die aus dem Stand der Technik bekannten Nachteile überwindet.

Hierzu weist die Grillvorrichtung vorteilhaft wenigstens ein Gehäuse auf, welches den wenigstens einen Grillraum umschließt. Unter Grillraum ist vorteilhaft der Raum zu verstehen, in welchem das Grillgut während des Grillvorgangs eingeführt ist. Unter Grillvorgang selbst ist weiterhin die Temperaturbeaufschlagung des Grillguts zu verstehen. Hierzu sieht die Vorrichtung wenigstens zwei Wärmequellen vor, welche im Wesentlichen vertikal, vorteilhaft vertikal, angeordnet sind.

Die Wärmequellen können beispielsweise über Strom oder über Gas betrieben werden und weiterhin beispielsweise als IR-Strahler ausgebildet sein.

Weiterhin weist das Gehäuse zur Aufnahme des Grillguts wenigstens zwei Durchgangsöffnungen auf. Diese Öffnungen sind durchgängig zum Grillraum ausgebildet. Die erste Durchgangsöffnung ist als Abluftöffnung ausgebildet. Dies ist von Vorteil, da durch diese Abluftöffnung die im Grillraum freiwerdenden Rauchgase und Fette aus den Grillraum heraus durch die Abluftöffnung geführt werden können. Somit kann eine besonders starke Rauchentwicklung innerhalb des Grillraums und damit einhergehende Beeinträchtigungen des Geschmacks des Grillguts verhindert werden.

Weiterhin ist das Grillgut durch die weitere, zweite Durchgangsöffnung dem Grillraum zuführbar. Es hat sich als besonders vorteilhaft erwiesen, Abluftöffnung und Zuführöffnung voneinander ausreichend weit zu trennen, sodass sichergestellt ist, dass der durch die Abluftöffnung austretende Grillrauch nicht wieder durch die Zuführöffnung in den Grillraum hineingeführt werden kann. In einer einfachen Ausführungsform ist daher denkbar, dass die Abluftöffnung an einer ersten Fläche des Gehäuses und die Zuführöffnung des Grillguts an einer zweiten Fläche des Gehäuses angeordnet ist, wobei es sich bei der ersten und zweiten Fläche um zwei verschiedene Flächen des Gehäuses handelt. So ist beispielsweise denkbar, dass die Abluftöffnung in der Deckenfläche des Gehäuses, also nach oben gerichtet durchgängig ausgebildet ist. Die Zuführöffnung hingegen ist vorteilhaft an einer vorderen Seitenfläche des Gehäuses angeordnet, sodass das Grillgut beispielsweise von vorne in die Vorrichtung hineingeführt werden kann.

Die hier beschriebene Vorrichtung ist zum Hochtemperaturgrillen von Grillgut ausgebildet. Die Vorrichtung kann daher auch als Hochtemperaturgrillvorrichtung bezeichnet werden. Vorteilhaft erfolgt der Grillvorgang bei Temperaturen von größer 500 °C.

Weitere vorteilhafte Ausführungen ergeben sich aus den Unteransprüchen.

Bei einer weiteren vorteilhaften Ausführungsform weist die Vorrichtung weiterhin wenigstens eine Grillgutaufnahmeeinrichtung auf, welche das Grillgut während des Grillvorgangs hält. Dies ist von Vorteil, da hierdurch sichergestellt wird, dass das Grillgut gleichmäßig mit Energie, vorteilhaft in Form von Wärme, beaufschlagt wird. Somit kann ein besonders gleichmäßiges Hochtemperaturgrillen des Grillguts innerhalb der Grillgutaufnahmeeinrichtung sichergestellt werden. Unter gleichmäßig ist vorteilhaft zu verstehen, dass das zu grillende Grillgut von wenigstens zwei Seiten mit Temperatur beaufschlagt wird.

Bei einer weiteren vorteilhaften Ausführungsform ist das Grillgut während des Grillvorgangs in vertikaler Position angeordnet. Besonders vorteilhaft ist das Grillgut in der vertikalen Position zwischen den mindestens zwei Wärmequellen angeordnet. Im einfachsten Fall kann die Positionierung derart erfolgen, dass der Abstand zwischen Grillgut und erster Wärmequelle sowie zwischen Grillgut und zweiter Wärmequelle gleich ist. Somit kann sichergestellt werden, dass das Grillgut von zwei Seiten mit Hitze beaufschlagt wird, sodass der Grillvorgang deutlich gegenüber dem Stand der Technik beschleunigt ausgeführt wird. Zudem kann hierdurch kontrolliert gegrillt werden, indem beide Seiten vorteilhaft mit der gleichen Wärmeenergie beaufschlagt werden.

Vorteilhaft werden als Grillgut in der vorliegenden Vorrichtung eiweißhaltige Lebensmittel, wie beispielsweise Fleisch oder Fisch, eingesetzt, welche dann vorteilhaft unter Nutzung der Maillard-Reaktion gebräunt werden. Aber auch anderes Grillgut ist denkbar.

Hierzu weist in einer weiteren vorteilhaften Ausführungsform die Grillgutaufnahmeeinrichtung wenigstens einen Grillrost, vorteilhaft wenigstens zwei Grillroste auf, welche an wenigstens einem Grillrostrahmen positionsveränderbar angelenkt sind. Durch die Kombination von Grillrostrahmen, welcher als Trägerrahmen verstanden werden kann, mit dem wenigstens einen, vorteilhaft mit zwei, Grillrost(en) kann eine gleichmäßige Energiebeaufschlagung des Grillguts sichergestellt werden.

Es hat sich weiterhin als vorteilhaft erwiesen, wenn die beiden Grillroste im unbestückten Zustand, also ohne Grillgut, im Wesentlichen parallel, besonders vorteilhaft parallel, zueinander ausgerichtet sind.

Unter der Formulierung "im Wesentlichen" wird in allen hier benutzten Fällen, in denen diese Formulierung im Rahmen der vorliegenden Erfindung verwendet wird, eine Abweichung im Bereich von 1% bis 30 %, insbesondere von 1% bis 20 %, insbesondere 1% bis 10 %, insbesondere von 1% bis 5 %, insbesondere von 1% bis 2 % von der Festlegung, die ohne die Verwendung diese Formulierung gegeben wäre, verstanden.

Bei einer weiteren vorteilhaften Ausführungsform ist der wenigstens eine Grillrost mit Spannelementen an dem wenigstens einen Grillrostrahmen positionsveränderbar angelenkt.

Besonders vorteilhaft ist der Grillrostrahmen mehrteilig ausgebildet, sodass pro Grillrost jeweils ein Grillrostrahmenteil vorgesehen ist. Dieses Grillrostrahmenteil kann durchgängig als Rahmen ausgebildet sein, welcher eine Öffnung aufspannt. In dieser Öffnung kann dann der wenigstens eine Grillrost zumindest teilweise angeordnet werden. Um nun eine ausreichende und sichere Fixierung zwischen Grillrost und Grillrostrahmenteil sicherzustellen, ist wenigstens ein Spannelement zwischen Grillrostrahmenteil und Grillrost angeordnet. Im einfachsten Fall ist das Spannelement als Federelement ausgebildet.

Es hat sich vorliegend gezeigt, dass mit Anordnung eines Grillrost durch mehrere Spannelemente am Grillrostrahmenteil eine besonders verlässliche Positionierung des Grillrost im bestückten Zustand mit Grillgut sichergestellt werden kann. Zudem wird hierdurch das Grillgut besonders gut fixiert.

In diesem Ausführungsbeispiel weist vorteilhaft die Grillgutaufnahmeeinrichtung zwei Grillroste auf, welche jeweils in einem getrennten Grillrostrahmenteil angeordnet sind. Jedes Grillrost wird vorteilhaft von wenigstens zwei, besonders vorteilhaft von vier Spannelementen von dem Grillrostrahmenteil beabstandet gehalten. Hierbei hat es sich als vorteilhaft erwiesen, die Spannelemente in einem Winkel von 30-100°, besonders vorteilhaft von 45° anzuordnen.

Um nun das Grillgut im bestückten Zustand auch sicher zu halten, sind beide Grillrostrahmeteile über wenigstens ein Schwenkgelenk und/oder über eine Schwenkachse gegeneinander verschwenkbar. Somit können die beiden Grillrostrahmenteile zum Bestücken mit Grillgut im einfachsten Fall aufgeklappt werden, sodass das Grillgut zwischen den beiden Grillrosten positioniert werden kann. Danach werden die beiden Grillrostrahmenteile wieder aufeinander zugeführt und entsprechend fixiert. Somit kann das Grillgut zwischen den beiden Grillrosten entsprechend gehalten werden.

Hierbei haben sich die Spannelemente als besonders vorteilhaft erwiesen, da diese stets sicherstellen, dass das Grillgut ausreichend sicher gehalten wird und während des Grillens gerade nicht aus der Grillgutaufnahmeeinrichtung herausgleiten kann.

Zudem handelt es sich bei der hier beschriebenen Grillgutaufnahmeeinrichtung um eine universal benutzbare Grillgutaufnahmeeinrichtung. Dies wird durch das Vorsehen der Spannelemente realisiert. Aufgrund der vorteilhaften Anordnung der Spannelemente vorteilhaft im Bereich der Ecken der Grillroste kann sichergestellt werden, dass auch besonders dicke Fleischstücke genauso sicher gehalten werden, wie zarte Fischstücke.

Zudem wird stets sichergestellt, dass das Grillgut mittig in der Grillgutaufnahmeeinrichtung positioniert ist. Somit kann stets die Energiebeaufschlagung durch die wenigstens eine Wärmequelle, vorteilhaft durch zwei Wärmequellen, gleichmäßig auf das Grillgut einwirken und dies entsprechend grillen.

Unter gleichmäßig ist vorteilhaft zu verstehen, dass durch die Energiebeaufschlagung vorteilhaft in Form von Wärme das Grillgut flächig von wenigstens zwei Seiten gegrillt wird und somit der Grillvorgang, in vorbestimmbarer Zeit abgeschlossen werden kann.

Vorteilhaft weisen die Grillroste hierzu eine Gitterstruktur auf. Dies ist von Vorteil, da hierdurch der Hochtemperaturgrillvorgang verkürzt werden kann und sich zudem das typische Grillmuster auf den Grillgutoberflächen ausbildet.

Erfindungsgemäß sind die mindestens beiden Wärmequellen in ihrer Position gegenüber dem Grillgut und/oder gegenüber der Grillgutaufnahmeeinrichtung und/oder gegenüber dem Gehäuse veränderbar ausgebildet. Dies ist von Vorteil, da durch die Abstandsänderung zwischen Wärmequellen, welche vorteilhaft als IR-Strahler ausgebildet sind, und Grillgut der Energieeintrag entsprechend kontrolliert werden kann.

So ist beispielsweise beim Grillen eines besonders dicken Fleischstückes für den Zustand "welldone" denkbar, zunächst den Abstand zwischen den beiden Wärmequellen und dem Grillgut maximal einzustellen, sodass zunächst ein zeitlich vorbestimmbarer Garvorgang durchgeführt werden kann. Soll zum Schluss eine besonders krosse Fleischoberfläche erzielt werden, so kann wenigstens eine Wärmequelle, vorteilhaft beide Wärmequellen, auf das Grillgut zubewegt werden, sodass der Wärmeeintrag kurzfristig in das Grillgut deutlich erhöht wird. Somit kann in besonders kurzer Zeit eine krosse Fleischoberfläche erreicht werden.

In diesem Zusammenhang hat es sich in einer weiteren vorteilhaften Ausführungsform als vorteilhaft gezeigt, wenn diese Positionsveränderung durch wenigstens ein Scherengestell ermöglicht wird. Im einfachsten Fall ist wenigstens ein Scherengestell zwischen Wärmequelle und Gehäuse, beide Bauteile verbindend, angeordnet. Mit Betätigung eines Betätigungsmittel ist es somit möglich, die Wärmequelle gegenüber dem Gehäuse in ihrer Position zu verändern, wodurch ebenfalls eine Positionsänderung gegenüber der Grillgutaufnahmeeinrichtung ausgeführt wird.

Ergänzend hierzu kann beispielsweise an der Außenseite des Gehäuses wenigstens ein Betätigungsmittel, beispielsweise ein Drehknopf, vorgesehen sein. Uber dieses Betätigungsmittel, welches mit dem Scherengestell direkt und/oder indirekt gekoppelt, beispielsweise über wenigstens einen Führungsstab, ausgebildet ist, kann das Scherengestell in besonders einfacher Art und Weise stufenlos in seiner Position ausgefahren und/oder eingefahren werden. Somit kann individuell der Abstand zwischen Wärmequelle und Grillgut justiert und eingestellt werden.

Erfindungsgemäß weist jede Wärmequelle ein separat einstellbares Scherengestell auf, welches die Wärmequelle gegenüber dem Gehäuse und/oder gegenüber der Grillgutaufnahmeeinrichtung in der Position veränderbar ausbildet. Das Vorsehen von mehreren, voneinander unabhängigen Scherengestellen ist vorteilhaft, wenn beispielsweise eine unterschiedliche Bräunung von den beiden Flächenseiten des Grillguts gewünscht ist. Dies kann beispielsweise dann der Fall sein, wenn ein Stück Fisch mit Haut in die Grillgutaufnahmeeinrichtung eingebracht ist.

In einer anderen Ausführungsform ist denkbar, dass die vorgesehenen Scherengestelle über einen Kopplungsmechanismus miteinander gekoppelt ausgebildet sind. Dies ist von Vorteil, da somit mit lediglich einem Betätigungsmittel die beiden

Wärmequellen zeitgleich gegenüber dem Grillgut und/oder gegenüber dem Gehäuse in ihrer Position verändert werden können.

Ferner ist auch denkbar, dass der Kopplungsmechanismus vorgesehen ist und durch weitere mögliche Betätigungsmittel, beispielsweise einem Schnappmechanismus, deaktiviert werden kann. Hierzu ist es von Vorteil, wenn sich beide Scherengestelle in der Ausgangsposition befinden, und hierbei den maximal weitesten Abstand gegenüber der Grillgutaufnahmeeinrichtung aufweisen. In dieser Ausgangsposition kann der vorgesehene Kopplungsmechanismus, welcher im einfachsten Fall durch ein einrastbares Kopplungsglied ausgebildet ist, gelöst oder auch wieder verbunden werden. So ist denkbar, dass mit externer Kraftbeaufschlagung auf das Kopplungsglied, beispielsweise durch Drücken eines Knopfes, das Kopplungsglied ausgerastet und somit beide Scherengestell voneinander getrennt in ihrer Position verändert werden können.

Ist hingegen wieder eine Kopplung gewünscht, so können beide einzelne Scherengestelle wieder in die Ausgangsposition verbracht werden. Im Anschluss daran kann beispielsweise durch Ziehen des Knopfes eine externe Kraftbeaufschlagung auf das Kopplungsglied ausgeführt werden, sodass dieses wieder einrastet und beide Scherengestelle wieder miteinander gekoppelt sind.

In einer weiteren vorteilhaften Ausführungsform ist die Abluftöffnung als horizontal angeordneter Langschlitz im Gehäuse, vorteilhaft an dessen nach oben gerichteter Oberfläche, ausgebildet. Hierdurch kann sichergestellt werden, dass die beim Grillen entstehenden Rauchgase gezielt durch die Abluftöffnung nach oben aus dem Gehäuse austreten können bzw. abgeführt werden.

Bei einer weiteren vorteilhaften Ausführungsform hat es sich als vorteilhaft erwiesen, wenn auf und/oder zumindest teilweise in dem Langschlitz ein Kaminabschnitt angeordnet ist. Dieser Kaminabschnitt ist vorteilhaft entnehmbar ausgebildet. Dies ist von Vorteil, insbesondere wenn die Vorrichtung zu reinigen ist. Der Kaminabschnitt selbst weist an seiner äußeren, nach oben gerichteten Oberfläche, welche vorteilhaft langschlitzförmig ausgebildet ist, zumindest teilweise gekrümmte Kanten auf. Diese Kantenkrümmung ist von Vorteil, da sich hieran das Fett, welches im austretenden Rauch mitgeführt wird, abscheidet.

Weiterhin weist der Kaminabschnitt eine nach unten in das Gehäuse gerichtete Unterseite auf, welche vorteilhaft C-profilartig ausgebildet ist. Dies ist von Vorteil, da das C-Profil des Kaminabschnitts den während des Grillvorgangs eingeführten Grillrostrahmen zumindest teilweise untergreift.

Im einfachsten Fall kann somit der Grillrostrahmen, vorteilhaft die beiden aneinander angeordneten Grillrostrahmenteile, zumindest teilweise in das C-Profil des Kaminabschnitts eingeschoben werden. Dies erfolgt vorteilhaft durch die zweite Durchgangsöffnung des Gehäuses, durch welche das Grillgut bzw. der Grillrostrahmen in den Grillraum hinein geführt wird. Durch die Halterung des Grillrostrahmens mittels des Kaminabschnitts kann eine dauerhafte verlässliche Anordnung des Grillguts innerhalb der Vorrichtung sichergestellt werden. Zudem bietet die direkte Anbindung von Grillrostrahmen am Kaminabschnitt eine besonders effektive und schnelle Rauchgasabführung aus dem Grillraum heraus durch die erste Durchgangsöffnung, welche der Kaminabschnitt mit ausbildet. Zugleich kann durch diese direkte Verbindung auch eine besonders hohe Fettabscheidung aus dem Rauchgas sichergestellt werden, da gerade eine Zirkulation des Rauchgases innerhalb des Garraums unterbunden wird. Es stellt sich ein Kamineffekt ein, welcher das entstehende Rauchgas schnell und gezielt aus dem Grillraum über den Kamiabschnitt heraus abführt. Somit ist die hier beschriebene Vorrichtung auch in Gebäudeinnenräumen einsetzbar.

Das innerhalb des Gehäuses, noch vorteilhafter innerhalb des Grillraums, angeordnete C-Profil trägt somit die eingeführte Grillgutaufnahmeeinrichtung. Dies kann im einfachsten Fall ohne Fixierung erfolgen. Selbstverständlich ist es nicht begrenzend zu verstehen, sodass es auch denkbar ist, dass das C- Profil wenigstens einen Vorsprung und/oder eine Ausnehmung aufweist, mit welcher die Grillgutaufnahmeeinrichtung gegen ein unerwünschtes Herausgleiten gesichert werden kann.

Vorsprung und/oder Ausnehmung können als Arretierungsmittel verstanden werden und ausgebildet sein, sodass sichergestellt ist, dass die Grillgutaufnahmeeinrichtung während des Grillvorgangs sicher und unverrückbar gehalten wird. Zudem stellen diese Arretierungsmittel sicher, dass die Grillgutaufnahmeeinrichtung stets vollständig in den Garraum eingeführt ist. Im einfachsten Fall können diese Arretierungsmittel als Vorsprünge oder auch als Vertiefungen ausgebildet sein, wobei vorteilhaft die entsprechenden Arretierungsmittel am C-Profil und/oder an der Grillgutaufnahmeeinrichtung vorgesehen sein können.

Bei einer weiteren vorteilhaften Ausführungsform ist die Vorrichtung als Moduleinheit ausgebildet. Dies ist von Vorteil, da hierdurch eine besonders leichte Reinigung der Einzelteile der Vorrichtung sichergestellt werden kann. Im einfachsten Fall kann die hier beschriebene Vorrichtung durch Schraubmechanismen in ihre Einzelteile zerlegt werden, sodass eine besonders effiziente und schnelle Reinigung, beispielsweise in der Spülmaschine umgesetzt werden kann.

Weiterhin kann unter Moduleinheit vorteilhaft verstanden werden, dass es möglich ist, über entsprechende Kopplungsmechanismen mehrere Moduleinheiten miteinander zu verbinden, sodass beispielsweise eine Grillstraße ausgebildet wird. Bei dieser Ausführungsform weist das Gehäuse eine dritte Durchgangsöffnung auf, welche vorteilhaft der zweiten Durchgangsöffnung zum Bestücken des Grillraumes gegenüberliegend an der Rückseite des Gehäuses angeordnet ist. Durch diese dritte Durchgangsöffnung ist es erstmals möglich, die über die zweite Durchgangsöffnung zugeführte Grillgutaufnahmeeinrichtung durch den Grillraum hindurch zu fördern, beispielsweise mit wenigstens einer Antriebseinheit auf Kettenbasis, und mit Austritt der Grillgutaufnahmeeinrichtung aus der hinteren, dritten Durchgangsöffnung zugleich das Einführen der Grillgutaufnahmeeinrichtung in eine weitere, zweite Moduleinheit, genauer gesagt durch die zweite Durchgangsöffnung der zweiten Moduleinheit in deren Grillraum hinein durchgeführt wird. Die erste Moduleinheit ist dann leer und zur Aufnahme einer weiteren Grillgutaufnahmeeinrichtung, welche beispielsweise wieder mit rohem Fleisch bestückt ist, bereit. Hierdurch kann folglich eine Grillstraße ausgebildet werden, welche aus zwei oder mehreren Moduleinheiten der hier beschriebenen Vorrichtung zusammengesetzt ist. Diese Grillstraße kann auch als System zum Grillen von Grillgut bezeichnet werden. Je nach Ausführung ist denkbar, dass 2, 3, 4, 5, 6, 7, 8, 9 oder 10 Moduleinheiten das hier beschriebene System zum Grillen von Grillgut ausbilden.

Die Moduleinheiten können über geeignete Kopplungsmechanismen, beispielsweise Rastnasen, Klemmnuten oder dergleichen, miteinander lösbar verbunden werden. Besonders vorteilhaft hat es sich erwiesen, wenn die Verbindung über entsprechende Dichtungen rauchgasdicht ausgebildet sind, sodass weiterhin das während des Grillprozesses entstehende Rauchgas lediglich über die Kaminabschnitte aus dem Grillraum ausgeführt werden können. Weiterhin ist es stets möglich, die einzelnen Moduleinheiten auch als einzelne Vorrichtungen zum Grillen von Grillgut zu verwenden. Dann ist lediglich die dritte Durchgangsöffnung an der Rückseite wieder zu verschließen. Dies kann beispielsweise im einfachsten Fall durch einen Schraubmechanismus oder Klippmechanismus erfolgen.

Bei einer weiteren vorteilhaften Ausführungsform weist die Vorrichtung weiterhin wenigstens eine Steuereinheit auf. Über diese Steuereinheit kann beispielsweise eine vorbestimmbare Temperatur und/oder ein vorbestimmbares Zeitintervall festgelegt und/oder kontrolliert werden.

Ergänzend ist denkbar, dass die wenigstens eine Steuereinheit mit wenigstens einer Sensoreinheit, beispielsweise einem Zeitsensor und/oder einem Temperatursensor und/oder einem Rauchsensor gekoppelt ist. Dies ist von Vorteil, da beispielsweise durch Kopplung mit einem Rauchsensor die Vorrichtung vorsorglich abgeschaltet werden kann, sofern ein vorbestimmbarer Schwellwert bei der Rauchentwicklung überschritten wird.

Alternativ ist auch denkbar, dass in Abhängigkeit der Kerntemperatur des Grillguts, welche über eine derartige Sensoreinheit erfasst werden kann, die Garzeit automatisch über die Steuereinheit reguliert und/oder kontrolliert werden kann. Erfasst die Sensoreinheit beispielsweise die für den gewünschten Gargrad ausreichende Kerntemperatur eines Stück Rindfleisches, so kann über einen Signalaustausch mit der Steuereinheit beispielsweise wenigstens eine Antriebseinheit, beispielsweise einen Motor, in Gang gesetzt werden, welche das Grillgut über geeignete Transportmittel aus dem Grillraum herausbefördert. Dies kann vorteilhaft automatisch durchgeführt werden, ohne den manuellen Benutzereingriff. Somit wird stets sichergestellt, dass das Grillgut auf den Punkt gegart wird.

Darüber hinaus ist denkbar, dass im Anschluss an die Vorrichtung, vorteilhafter an dem Grillraum, ein Warmhaltebereich angeschlossen ist, um bereits fertiges Grillgut entsprechend für den Verzehr zu temperieren oder Ruhen zu lassen.

Besonders vorteilhaft hat es sich erwiesen, wenn die hier beschriebene Vorrichtung aus Edelstahl ausgebildet ist.

Weiterhin betrifft die vorliegende Erfindung ein System zum Grillen von Grillgut welches wenigstens zwei aneinander angeordnete Vorrichtungen, wie oben beschrieben aufweist.

Im vorliegenden Fall ist unter Hochtemperaturgrillvorrichtung eine Grillvorrichtung zu verstehen, in welcher das Grillgut mit einer Temperatur im Bereich von mehr als 500 °C, vorteilhafter von 750-950 °C, vorteilhafter von 800-850 °C beaufschlagt wird. Insbesondere Temperaturen von 790°C, 791°C, 792°C, 793 °C, 794 °C, 795 °C, 796 °C, 797°C, 798 °C, 799 °C, 800°C, 801 °C, 802 °C, 803 °C, 804 °C, 805 °C, 806 °C, 807 °C, 808 °C, 809 °C, 810 °C, 811 °C, 812 °C, 813 °C, 814 °C, 815 °C, 816 °C, 817 °C, 818 °C, 819 °C, 820 °C, 821 °C, 822 °C, 823 °C, 824 °C oder 825 °C haben sich als vorteilhaft erwiesen, da hierbei die beste Bräunungsreaktion des eiweißhaltigen Grillgutes erreicht werden kann.

Wird ein System aus mehreren Moduleinheiten verwendet, so ist es denkbar, dass die erste Moduleinheit eine niedrigere Temperatur, beispielsweise 750 °C, aufweist als die zweite Moduleinheit mit beispielsweise 810 °C. dies ist von Vorteil, wenn zum Abschluss in der zweiten Moduleinheit nochmals eine besonders krustige Oberfläche des Grillguts geschaffen werden soll.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine erste perspektivische Ansicht einer Ausführungsform der Vorrichtung;
- Fig. 2: eine weitere perspektivische Ansicht einer Ausführungsform der Vorrichtung von hinten;
- Fig. 3a-c: weitere Ansichten der Vorrichtung;
- Fig. 4: eine erste Explosionszeichnung einer Ausführungsform der Vorrichtung;
- Fig. 5: eine weitere Explosionszeichnung einer Ausführung der Vorrichtung;
- Fig. 6: eine Schnittansicht einer Ausführungsform der Vorrichtung;
- Fig. 7: eine weitere Schnittansicht einer Ausführungsform der Vorrichtung;
- Fig. 8: eine weitere schematische Schnittansicht einer Ausführungsform der Vorrichtung;
- Fig. 9-11: weitere Ansichten von Einzelbauteilen der Vorrichtung;
- Fig. 12-18: unterschiedliche Ansichten Grillgutaufnahmeeinrichtung; und
- Fig. 19: eine beispielhafte Ansicht einer möglichen Wärmequelle.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

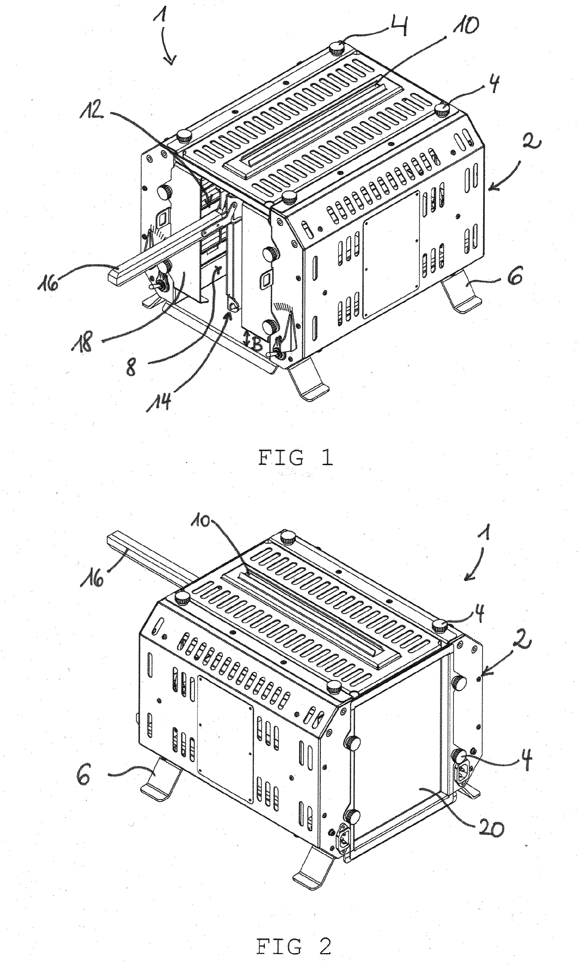

Fig. 1 zeigt eine perspektivische Ansicht der Vorrichtung 1, welche ein Gehäuse 2 aufweist. Das Gehäuse 2 ist mehrteilig ausgebildet und im vorliegenden exemplarischen Ausführungsbeispiel über einen Schraubmechanismus fixiert. Hierzu weist das Gehäuse 2 mehrere Schrauben 4 auf. Weiterhin weist das Gehäuse 2 an seiner Unterseite einen Fußgestell 6 auf. Die Schrauben 4 sind für die modulare Bauweise von Vorteil, da mit Betätigung der Schrauben 4 das Gehäuse 2 einfach und schnell auseinandergelegt werden kann. Dies ist vorteilhaft für die Reinigung und Wartung der Vorrichtung nach Gebrauch. Das Fußgestell 6 ist vorteilhaft, da hierdurch ein Abstand zu der Oberfläche geschaffen wird, auf welcher Vorrichtung 1 für die Benutzung angeordnet ist. Durch die Beabstandung von Gehäuse 2 und Oberfläche (nicht gezeigt) mittels Fußgestell 6 wird eine zusätzliche Luftzirkulation bedingt und ein Hitzestau an der Unterseite der Vorrichtung 1 wird vermieden.

Das Gehäuse 2 umspannt den innenliegenden Grillraum 8. In den Grillraum 8 wird das zu grillende Grillgut eingeführt.

Das Gehäuse 2 weist eine erste Durchgangsöffnung 10 auf, welche an der nach oben gerichteten Oberseite des Gehäuses 2 in Form eines Langschlitz ausgebildet ist. Die Ausführung ist aber nicht auf den Langschlitz begrenzt, so dass andere Öffnungsformen denkbar sind, beispielsweise rund. Zudem können auch mehr als eine einzige erste Durchgangsöffnung vorgesehen sein, beispielsweise zwei oder drei erste Durchgangsöffnungen. Allen ersten Durchgangsöffnungen ist gemein, dass sie aus dem Grillraum 8 nach oben hinaus durchgängig ausgebildet sind, so dass beim Grillvorgang entstehender Rauch direkt nach oben aus dem Grillraum 8 heraus abführbar ist. Dies ist von Vorteil, da hierdurch die gesamte Rauchentwicklung deutlich minimiert wird.

Weiterhin weist das Gehäuse 2 eine zusätzliche, zweite Durchgangsöffnung 12 auf. Diese ist vorteilhaft an einer Seitenfläche des Gehäuses 2, vorteilhaft an der schmalen Stirnseite des Gehäuses 2 ausgebildet. Durch diese zweite Durchgangsöffnung 12 kann das Grillgut in den Grillraum 8, beispielsweise mit einer Grillgutaufnahmeeinrichtung 14, eingeführt werden.

Es hat sich in diesem Zusammenhang als vorteilhaft erwiesen, wenn die Grillgutaufnahmeeinrichtung 14 einen lösbaren Griff 16 aufweist. Mit diesem Griff 16 ist es besonders sicher und leicht möglich, die Grillgutaufnahmeeinrichtung 14 aus dem Grillraum 8 zu entfernen bzw. einzuführen, ohne dass der Benutzer Verbrennungen oder Verletzungen befürchten muss. Der Griff 16 bildet eine ausreichende Beabstandung zum hochtemperierten Grillraum 8.

Weiterhin ist es von Vorteil, wenn die zweite Durchgangsöffnung 12 wenigstens eine, vorteilhaft zwei Durchgangsbegrenzungen 18 aufweist. Diese dienen dem Spritzschutz. Zudem verhindern sie einen ungewollten Rauchaustritt während des Grillvorgangs, so dass der Rauch über den als Langschlitz ausgebildeten Abschnitt 10 aus dem Grillraum 8 gezielt geführt ausgeleitet werden kann. Zur Strömungsführungsverbesserung des Rauches während des Grillvorgangs, sind die Durchgangsbegrenzungen 18 im Wesentlichen vertikal angeordnet und bilden die zweite Durchgangsöffnung 12 aus bzw. begrenzen diese seitlich. Zusätzlich wird die Strömungsführung durch die nach innen gerichteten, in Richtung Boden schräg verlaufenden Kanten signifikant verbessert. Diese brechen die Strömungsverwirbelungen im Grillraum. Damit auch der beim Grillvorgang entstehende Rauch schnell aus dem Grillraum 8 abgeführt werden kann, weisen die Durchgangsbegrenzungen 18 einen Abstand B zum Gehäuseboden auf. Hierdurch kann sichergestellt werden, dass immer ausreichend Luft von Außen in den Grillraum 8 hineinziehen kann, und somit ein Sog ausgebildet wird, während der entstehende Rauch über die erste Durchgangsöffnung 10 aus dem Grillraum 8 abgeführt wird.

Fig. 2 zeigt eine perspektivische Rückansicht der Vorrichtung 1. In diesen Ausführungsbeispielen ist die weitere Stirnseite 20, welche der Rückseite der Vorrichtung 1 entspricht, verschlossen ausgebildet, vorteilhaft mittels Schraubmechanismus. Dies ist selbstverständlich nicht begrenzend zu verstehen, sodass es auch denkbar ist, dass die Rückseite 20 offen vorliegen kann, sodass beispielsweise das Grillgut nach erfolgreich abgeschlossenen Grillvorgangs an der Rückseite aus den Grillraum 8 herausgeführt oder auch entnommen werden kann.

Weiterhin ist eine geöffnete Rückseite 20 dann von Vorteil, wenn die Vorrichtung 1 als System verwendet werden soll und mehrere derartiger Vorrichtungen 1 in Reihe hintereinander gekoppelt angeordnet sind. Dies stellt die Ausbildung einer Grillstrasse dar (nicht gezeigt). Ergänzend sei noch darauf hingewiesen, dass an der geöffneten Rückseite 20 ein Warmhaltebereich oder dergleichen angeordnet sein kann, in welche das fertig gegrillte Grillgut zum Ruhen hineingeführt wird.

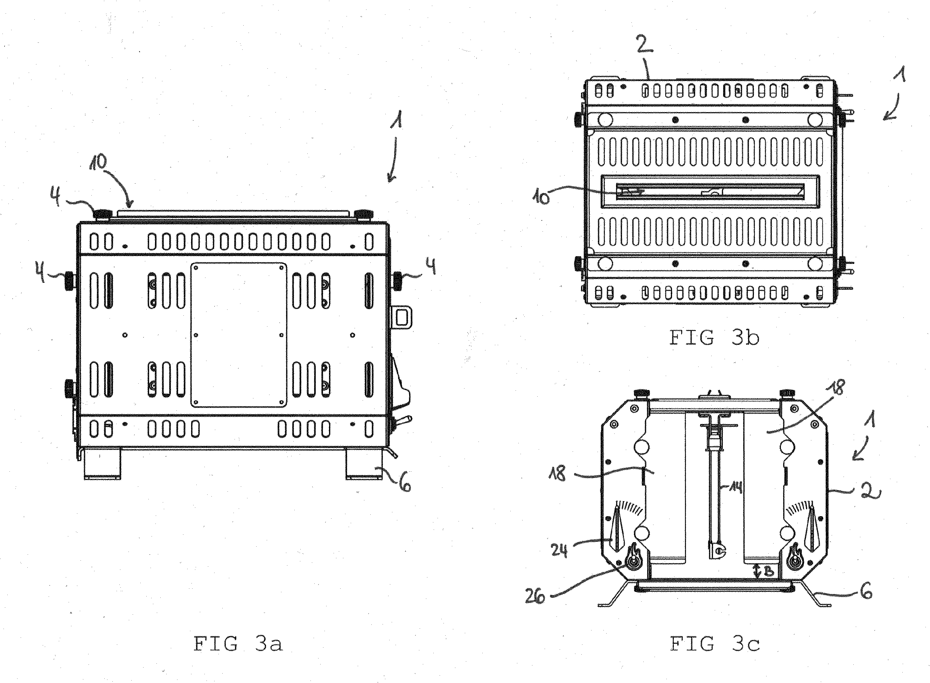

Fig. 3 a bis c zeigen weitere Ansichten der Vorrichtung 1. Insbesondere in Fig. 3b ist eine Draufsicht auf die Vorrichtung 1 gezeigt, wo die erste Durchgangsöffnung 10 an der Oberseite des Gehäuses 2 als Langschlitz ausgebildet ist. Durch diese Durchgangsöffnung 10 kann der beim Grillen entstehende Rauch aus dem Grillraum 8 austreten.

In Fig. 3c ist eine Frontansicht auf die Stirnseite der Vorrichtung 1 gezeigt, welche die zweite Durchgangsöffnung 12 sowie die beiden Durchgangsbegrenzungen 18 zeigt. Zudem ist hier die Grillgutaufnahmeeinrichtung 14 im eingeführten Zustand in den Grillraum 8 gezeigt. Hier ist besonders gut zu erkennen, dass die Grillgutaufnahmeeinrichtung 14 während des Grillvorgangs in vertikaler Position angeordnet ist. Besonders vorteilhaft hängt die Grillgutaufnahmeeinrichtung 14 am Kaminabschnitt 22 und wird von diesem zumindest teilweise untergriffen.

An der Außenseite des Gehäuses 2 sind jeweils rechts und links zwei Betätigungsmittel 24, 26 vorgesehen. Das erste Betätigungsmittel 26 dient zum Aktivieren der sich innerhalb des Gehäuses angeordneten Wärmequelle (nicht gezeigt) in Form eines IR-Strahlers. Das weitere Betätigungsmittel 24 dient der Abstandsänderung, vorteilhaft stufenlos, der Wärmequelle (nicht gezeigt) gegenüber der Grillgutaufnahmeeinrichtung 14. In diesem Ausführungsbeispiel sind zwei Wärmequellen (nicht sichtbar) vorgesehen, wobei jeder Wärmequelle ein erstes und ein zweites Betätigungsmittel 24, 26 zugewiesen ist.

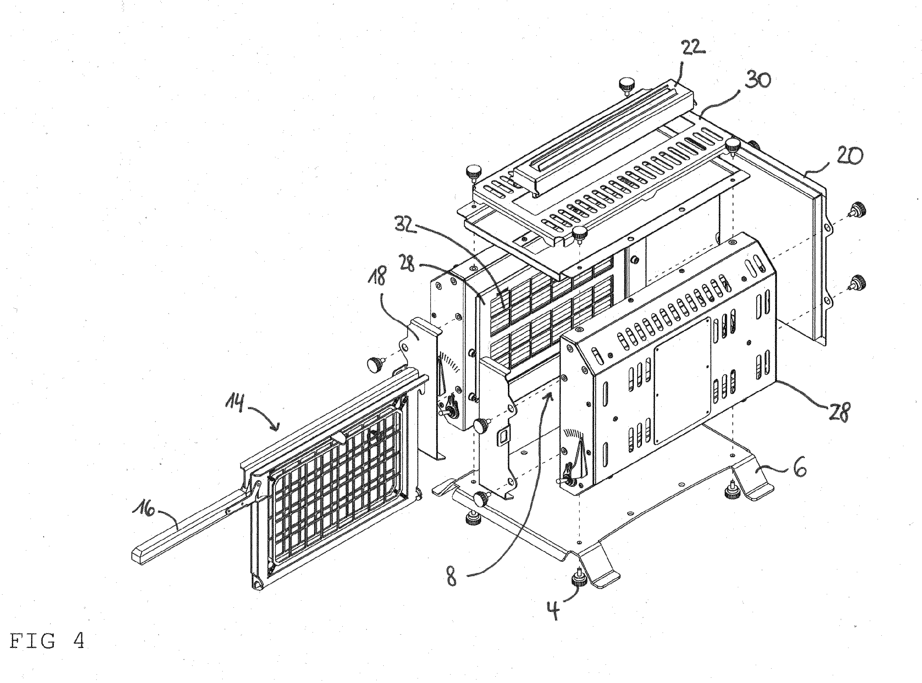

In Fig. 4 ist eine erste Explosionsdarstellung der Vorrichtung 1 gezeigt. Das Gehäuse 2 wird durch einzelne Modulbauteile, welche miteinander verschraubt werden können, ausgebildet.

Vorteilhaft wird das Gehäuse 2 wenigstens durch das Fußgestell 6 zur ausreichenden Beabstandung der Vorrichtung gegenüber dem Boden, wenigstens zwei Seitenwandungen 28, sowie einem Deckel 30 ausgebildet. Optional ist denkbar, dass das Gehäuse 2 an seiner weiteren Stirnseite 20 verschlossen ausgebildet ist. Hierdurch wird der Grillraum 8 aufgespannt.

Vorteilhaft ist innerhalb des Grillraums 8 wenigstens eine Wärmequelle 32, vorteilhaft zwei Wärmequellen 32 vorgesehen. Im einfachsten Fall sind die beiden vorgesehenen Wärmequellen 32 als Infrarotstrahler ausgebildet. Besonders vorteilhaft sind die Wärmequellen 32 im Wesentlichen parallel zum eingeführten Grillgut und/oder zu den Grillrosten 34 der Grillgutaufnahmeeinrichtung 14 ausgebildet.

Weiterhin optional ist denkbar, dass auf dem Fußgestell 6 und/oder an dem Fußgestell 6 innerhalb des Grillraums 8 wenigstens ein dem Grillraum 8 entnehmbares Auffangmittel (nicht gezeigt), beispielsweise eine Schale anordenbar ist. Dieses Auffangmittel dient zum Auffangen von Bratensäften oder sonstigen Flüssigkeiten, welche während des Grillvorgangs entstehen. Dies kann beispielsweise auch Fett sein.

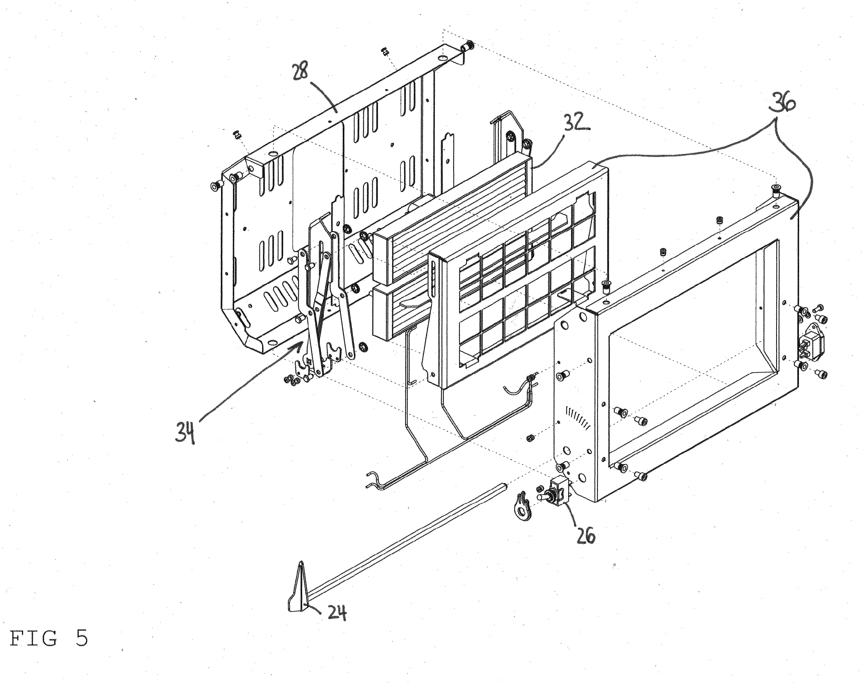

Fig. 5 zeigt eine weitere schematische Explosionszeichnung eines Teils der Vorrichtung 1. Insbesondere ist hier eine Seitenwandung 28 des Gehäuses 2 gezeigt. Diese bildet den nach außen liegenden Abschluss des Grillraums 8.

Die Wärmequelle 32, welche hier als Infrarotstrahler ausgebildet ist, ist über wenigstens ein Scherengestell 34 mit der Seitenwandung 28 verbunden. Das Scherengestell 34 ermöglicht eine besonders einfache Positionsveränderung der Wärmequelle 32 gegenüber der Grillgutaufnahmeeinrichtung (nicht gezeigt) und/oder gegenüber der Seitenwandung 28.

Zum Schutz der Wärmequelle 32 ist weiterhin ein Blendrahmen 36 vorgeschaltet. Dieser kann mehrteilig ausgebildet sein.

Besonders vorteilhaft ist das Scherengestell 34 über das Betätigungsmittel 24 gekoppelt, sodass mit Verdrehen des Betätigungsmittels 24, beispielsweise nach rechts, dass Scherengestell 34 aus seiner ursprünglich eingefahrenen Position ausgefahren wird. Hierdurch wird zugleich die Wärmequelle 32 in ihrer Position verändert.

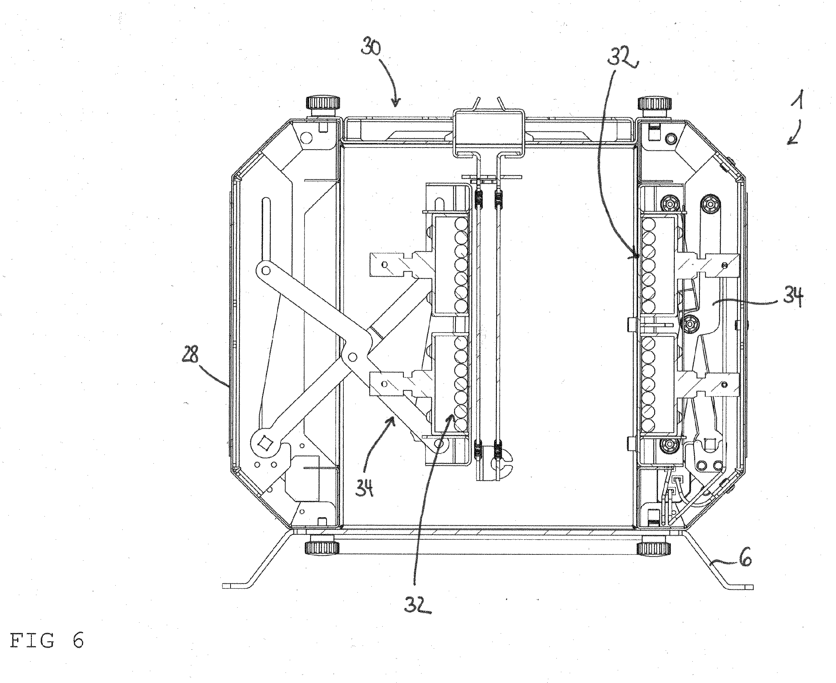

Dies wird zudem in Fig. 6 nochmals veranschaulicht. Hier ist gezeigt, dass die erste Wärmequelle 32 auf der linken Sichtseite mit ausgefahrenem Scherengestell 34 direkt benachbart zur Grillgutaufnahmeeinrichtung 16 angeordnet ist.

Die zweite Wärmequelle 32 hingegen auf der rechten Seite neben der Grillgutaufnahmeeinrichtung 14 ist im eingefahrenen Zustand des Scherengestells 34 gezeigt. Hier sind beide Scherengestelle34 voneinander entkoppelt und separat in ihrem Abstand zum Grillgut, welches sich in der Grillgutaufnahmeeinrichtung 14 befindet, anordenbar.

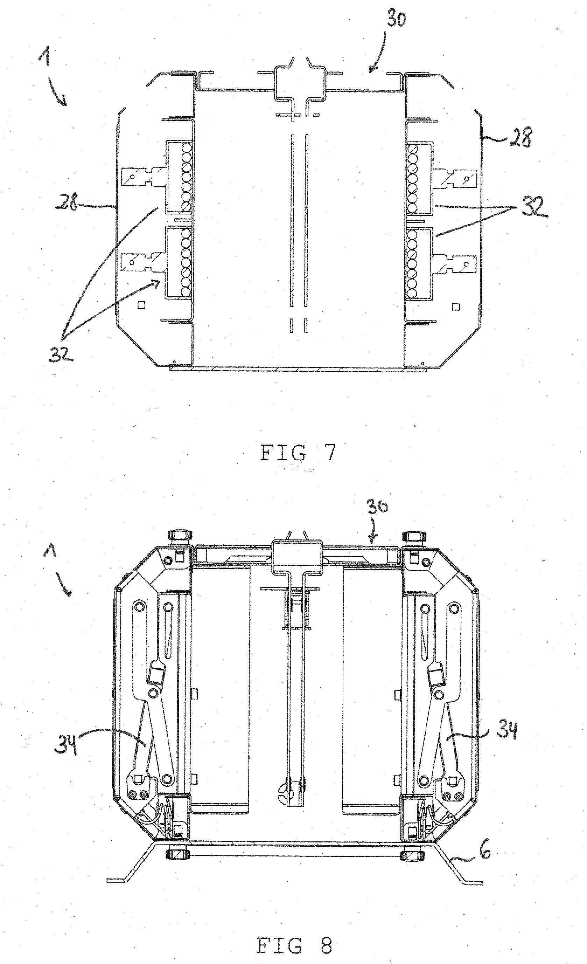

Weitere exemplarische Ansichten sind in Fig. 7 und 8 gezeigt, wobei in Fig. 8 beide Scherengestelle 34 in der Ausgangsposition gezeigt sind. Unter Ausgangsposition ist vorliegend zu verstehen, dass beide Scherengestelle den maximal weitesten Abstand zur Grillgutaufnahmeeinrichtung 14 aufweisen.

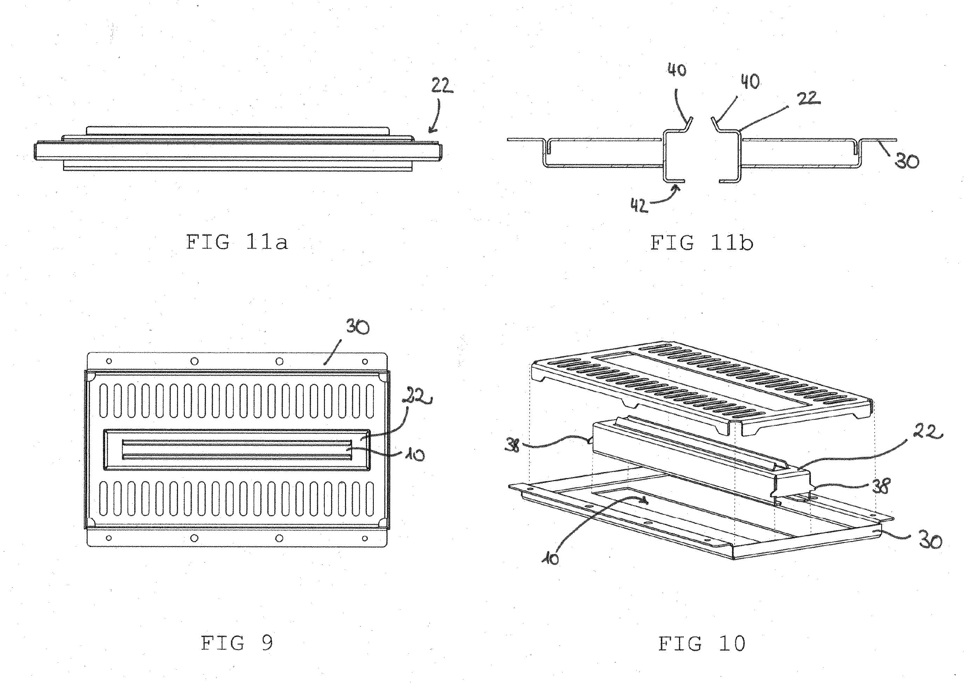

Fig. 9 zeigt die Draufsicht auf den Deckel 30. Mittig des Deckels 30 ist die erste Durchgangsöffnung 10, hier als Langschlitz, ausgebildet. Begrenzt bzw. ausgebildet wird diese Durchgangsöffnung 10 durch den Kaminabschnitt 22, welcher in die Durchgangsöffnung 10 lösbar einsetzbar ist und diese somit begrenzt.

Des Weiteren zeigt Fig. 10 eine Explosionsdarstellung des Deckels 30 der Fig. 9.

Der Deckel 30 weist die erste Durchgangsöffnung 10 auf. Der Kaminabschnitt 22 weist seitliche Vorsprünge 38 auf, mit welchen der Kaminabschnitt 22 auf den Deckel 30 und zumindest teilweise durch die Durchgangsöffnung 10 anordenbar ist. Die seitlichen Vorsprünge 38 dienen als Auflagefixierung des Kaminabschnitts 22 auf den Deckel 30.

Besonders vorteilhaft ist der Kaminabschnitt 22 ebenfalls in Form des Langschlitz der Durchgangsöffnung 10 ausgebildet. In Fig. 11a ist eine seitliche Ansicht des Kaminabschnitts 22 gezeigt. Ergänzend hierzu ist auf die Fig. 11b zu verweisen. Diese zeigt eine vereinfachte Schnittansicht des Kaminabschnitts 22, ohne die seitlichen Vorsprünge 38 zum besseren Verständnis.

Der Kaminabschnitt 22 ist zumindest teilweise innerhalb der Durchgangsöffnung 10 angeordnet, sodass sich ein erster, oberer Teil bedingt. Dieser obere Teil ist im Wesentlichen rechteckig ausgebildet und weist schräg nach oben gerichtete, aufeinander zulaufende Kanten 40 auf. Diese Kanten sowie insbesondere deren Schrägstellung begünstigen die Fettabscheidewirkung des Kaminabschnitts 22. An den schrägen Kanten 40 kann das Fett, welches sich im vorbeiströmenden Rauch befindet, von diesem abgetrennt und abgeschieden werden.

Weiterhin weist der Kaminabschnitt 22 wenigstens einen weiteren, unteren Teil auf, welche innerhalb des Grillraums 8 angeordnet ist. Dieser weitere, untere Teil ist in Form eines C-Profils 42 ausgebildet. Dieses C-Profil 42 dient dazu, die Grillgutaufnahmeeinrichtung (nicht gezeigt) während des Grillvorgangs zu untergreifen und in vertikaler Position zu halten.

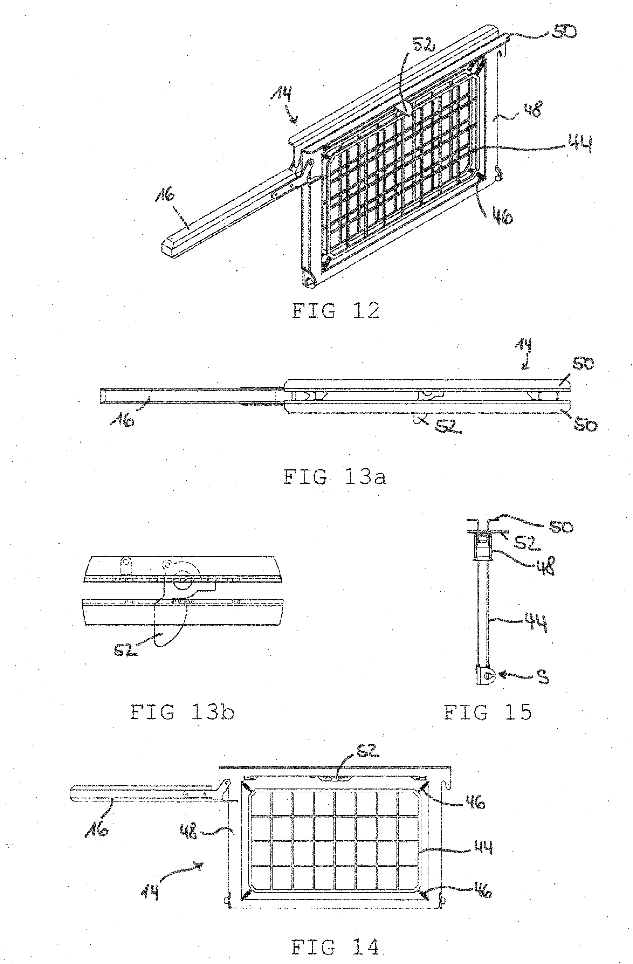

In Fig. 12 ist eine perspektivische Darstellung der Grillgutaufnahmeeinrichtung 14 gezeigt. In dieser Ausführungsvariante ist zudem der Griff 16 mit dargestellt. Die Grillgutaufnahmeeinrichtung 14 weist vorteilhaft zwei Grillroste 44 auf, welche über eine Vielzahl Spannelementen 46 jeweils an einem Grillrostrahmenteil 48 in ihrer Position veränderbar angelenkt sind.

Weiterhin weist jedes Grillrostrahmenteil 48 an seinem nach oben gerichteten Ende wenigstens einen seitlichen Vorsprung 50 auf. Dieser Vorsprung 50 dient dazu, dass die Grillgutaufnahmeeinrichtung 14 während des Grillvorgangs in das untere C-Profil des Kaminabschnitts 22 eingeschoben bzw. eingeführt werden kann. Die wenigstens einen seitlichen Vorsprünge 50 eines jeden Grillrostrahmenteils 48 werden somit während des Grillvorgangs zumindest teilweise, vorteilhaft vollständig, von dem C-Profil des Kaminabschnitts 22 untergriffen. Im einfachsten Ausführungsfall sind die Vorsprünge 50 durchgehend ausgebildet und erstrecken sich in im Wesentlichen horizontaler Richtung, vorteilhafter in horizontaler Richtung. Zur Kopplung von Vorsprüngen 50 und C-Profil des Kaminabschnitts 22 ist es besonders von Vorteil, wenn diese zueinander komplementär ausgebildet sind, so dass jederzeit die sichere Halterung der Grillgutaufnahmeeinrichtung 14 am Kaminabschnitt 22 sichergestellt ist.

Daher ist auch denkbar, die Neigungen im Bereich von 5°, 10°, 15°, 20°, 25°, 30°, 35°, 40° oder 45° auszubilden. Diese Neigungen bieten weiterhin die Möglichkeit eines einfachen Einführens der Grillgutaufnahmeeinrichtung und deren sicherer Halterung. Zudem können sich die Neigungen von C-Profil und Vorsprüngen 50 als vorteilhaft erweisen, sofern die Grillgutaufnahmeeinrichtung 14 automatisch wieder aus dem Grillraum (nicht gezeigt) heraus transportiert werden soll. Die Neigung kann die Gleitwirkung verbessern.

In Fig. 13a und 13b sind Draufsichten der Grillgutaufnahmeeinrichtung 14 gezeigt, wobei insbesondere in Fig. 13b der Verschlussmechanismus 52 vergrößert dargestellt ist. Der Verschlussmechanismus 52 in oben an der Grillgutaufnahmeeinrichtung 14 angeordnet und kann als Haken verschwenkt werden. Durch dieses Verschwenken werden die beiden Grillrostrahmenteile 48 miteinander lösbar verbunden. Das zwischen den Grillrostrahmenteilen 48 angeordnete Grillgut (nicht gezeigt) wird somit sicher in der vorbestimmbaren Position gehalten. Alternativ ist auch denkbar, dass der Verschlussmechanismus 52 als Schnappmechanismus ausgebildet ist, so dass mit Zusammenführen der beiden Grillrostrahmenteile 48 eine Druckkraft auf den Verschlussmechanismus 52 wirkt und dieser in das zweite Grillrostrahmenteil 48 verschnappt.

In Fig. 14 ist eine Seitenansicht der Grillgutaufnahmeeinrichtung 14 gezeigt, wobei die Spannelemente 46 das Grillrost 44 vom Grillrostrahmenteil 48 beabstanden. Besonders vorteilhaft hat es sich erwiesen, wenn die Spannelemente 46 in einem Winkel von 45° bezogen auf die durch das Grillrostrahmenteil 48 aufgespannte Öffnung, innerhalb welcher die Grillroste 44 angeordnet sind. Die Grillroste 44 sind lediglich über die Spannelemente 46 mit dem Grillrostrahmenteil 48 verbunden. Die Grillroste 44 werden durch die Spannelemente 46 in Position gehalten und mit Aufnahme des Grillguts zwischen die Grillroste 44 auch entsprechend ausgelenkt. Hierdurch werden auch die Spannelemente 46 ausgelenkt und gespannt. Aufgrund der vorteilhaften Ausbildung der Spannelemente 46 als Federn wird durch die Rückstellkraft das jeweilige Grillrost 44 gegen das Grillgut geführt und dieses entsprechend verspannt. Hierbei hat es sich als vorteilhaft erwiesen, die Summe der Rückstellkräfte derart auszuwählen, dass sowohl Fisch als auch Fleisch als Grillgut in Frage kommen.

Hierdurch kann besonders einfach sichergestellt werden, dass unabhängig von der Stärke des Grillguts stets das Grillgut selbst mittig innerhalb der Grillgutaufnahmeeinrichtung 14 angeordnet ist.

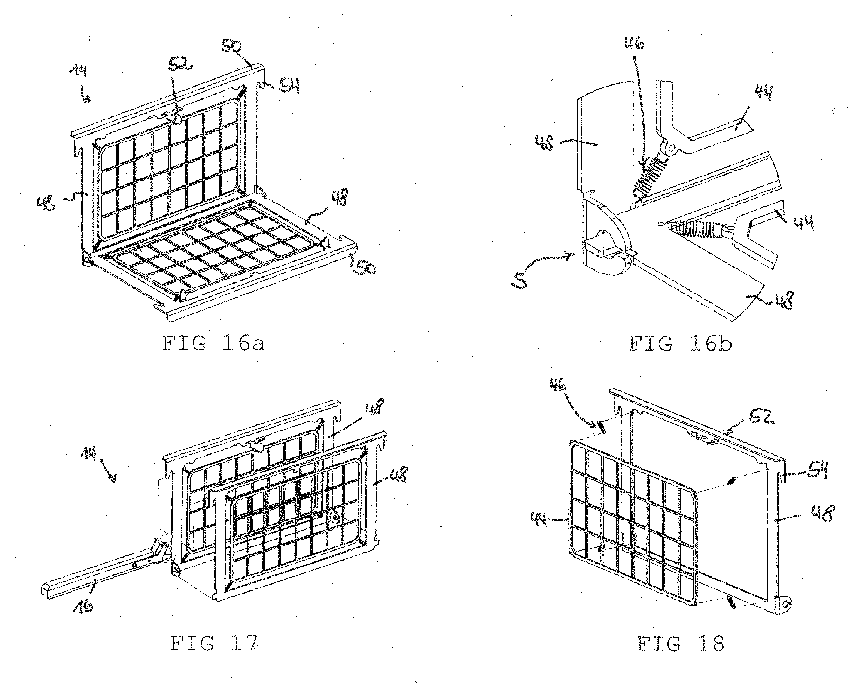

In Fig. 15 ist eine weitere Ansicht der Grillgutaufnahmeeinrichtung 14 gezeigt, wobei in dieser Frontansicht der Verschwenkmechanismus S dargestellt ist. Je nach Ausführung des Verschwenkmechanismus S ist es möglich, dass beide Grillrostrahmenteile 48 gegeneinander verschwenkt werden können und/oder dass lediglich ein Grillrostrahmenteil 48 gegenüber dem anderen verschwenkt werden kann, wobei ein Grillrostrahmenteil 48 unbewegt verbleibt. Dies ist in Fig. 16a gezeigt.

In Fig. 16b ist eine entsprechende Vergrößerung des Verschwenkmechanismus S gezeigt. Zugleich ist auch hier die Anlenkung der Spannelemente 46 mit dem Grillrost 44 unten Grillrostrahmenteil 48 dargestellt. In Fig. 17 und Fig. 18 sind weitere Darstellungen der Grillgutaufnahmeeinrichtung 14 gezeigt. Insbesondere ist ersichtlich, dass die Grillrostrahmen 48 an ihrem vorderen und hinteren oberen Abschnitt jeweils eine sich nach unten erstreckende Nase 54 aufweisen. Diese Nase 54 dient der Einhakung des Griffes 16, um die Grillgutaufnahmeeinrichtung 16 in den Grillraum 8 hinein zu führen, um den Grillvorgang zu beginnen und auch um die Grillgutaufnahmeeinrichtung 14 wieder aus dem Grillraum 8 heraus zu führen, wenn der Grillvorgang abgeschlossen ist und das Grillgut den vorbestimmten Grillgrad aufweist.

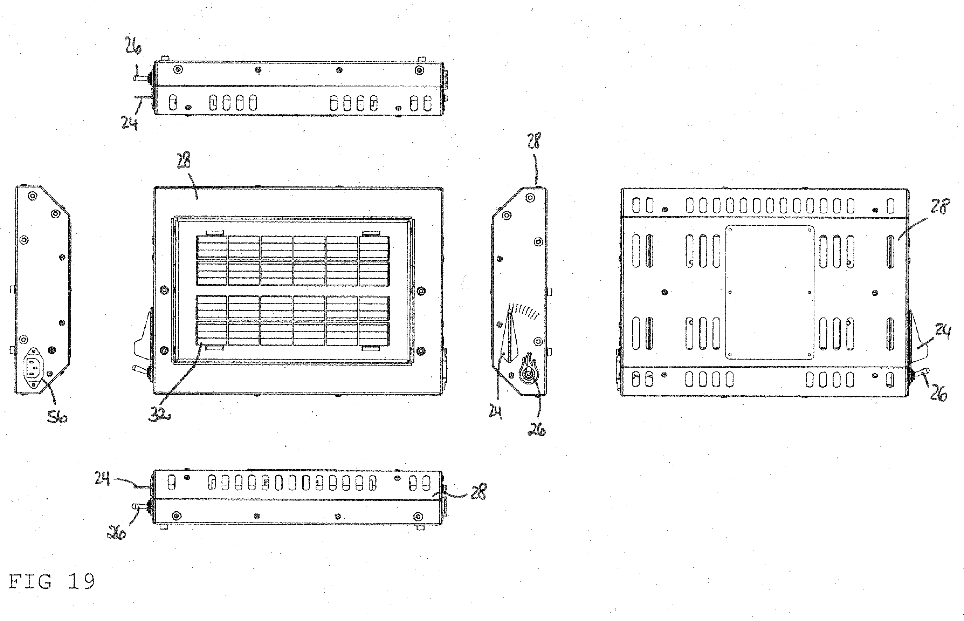

In Fig. 19 sind nochmals die einzelnen Teile der Wärmequelle 32 nebst den dazugehörigen Gehäuseteilen dargestellt. Insbesondere ist bei der dargestellten Ansicht ersichtlich, dass es auch ein Stromanschluss 56 vorgesehen ist.

Obwohl die Erfindung im Detail durch die vorteilhaften Ausführungsbeispiele näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung, wie er in den beigefügten Ansprüchen definiert wird, zu verlassen.

### Bezugszeichenliste

- 1: Vorrichtung
- 2: Gehäuse
- 4: Schraube
- 6: Fußgestell
- 8: Grillraum
- 10: erste Durchgangsöffnung
- 12: zweite Durchgangsöffnung
- 14: Grillgutaufnahmeeinrichtung
- 16: Griff
- 18: Durchgangsbegrenzung
- 20: Rückseite
- 22: Kaminabschnitt
- 24: Betätigungsmittel
- 26: Betätigungsmittel
- 28: Seitenwanderung
- 30: Deckel
- 32: Wärmequelle
- 34: Scherengestell
- 36: Blendrahmen
- 38: Vorsprung
- 40: Kante
- 42: C-Profil
- 44: Grillrost
- 46: Spannelement
- 48: Grillrostrahmenteil
- 50: Vorsprung
- 52: Verschlussmechanismus
- 54: Nase
- 56: Stromanschluss
- S: Verschwenkmechanismus
- B: Abstand

## Patentansprüche

1. Vorrichtung (1) zum Grillen von Grillgut wenigstens aufweisend ein Gehäuse (2) zur Aufnahme des Grillguts, wobei das Gehäuse wenigstens einen Grillraum umspannt, wobei das Gehäuse weiterhin wenigstens zwei Durchgangsöffnungen (10; 12) aufweist und die erste Durchgangsöffnung (10) als Abluftöffnung ausgebildet ist und das Grillgut durch die zweite Durchgangsöffnung (12) dem Grillraum (8) zuführbar ist, wobei das Gehäuse (2) wenigstens zwei Wärmequellen (32) zum Erwärmen des Grillguts aufweist, welche im Wesentlichen vertikal angeordnet sind,
**dadurch gekennzeichnet, dass** wenigstens eine Wärmequelle (32) in ihrer Position gegenüber dem Grillgut und/oder gegenüber der Grillgutaufnahmeeinrichtung (14) veränderbar ausgebildet ist,
und dass die wenigstens eine Wärmequelle (32) mit wenigstens einem Scherengestell (34) an dem Gehäuse (2) positionsveränderbar angeordnet ist.

2. Vorrichtung nach dem vorangegangenen Anspruch
**dadurch gekennzeichnet, dass**
diese weiterhin wenigstens eine Grillgutaufnahmeeinrichtung (14) aufweist, welche das Grillgut während des Grillvorgangs hält.

3. Vorrichtung nach wenigstens einem der vorangegangenen Ansprüche,
**dadurch gekennzeichnet, dass**
das Grillgut während des Grillvorgangs in vertikaler Position angeordnet ist.

4. Vorrichtung nach wenigstens einem der vorangegangenen Ansprüche,
**dadurch gekennzeichnet, dass**
die Grillgutaufnahmeeinrichtung (14) wenigstens einen Grillrost (44), vorteilhaft wenigstens zwei Grillroste (44), aufweist, welcher an wenigstens einem Grillrostrahmenteil (48) positionsveränderbar angelenkt ist.

5. Vorrichtung nach wenigstens einem der vorangegangenen Ansprüche,
**dadurch gekennzeichnet, dass**
der wenigstens eine Grillrost (44) mit Spannelementen (46) an wenigstens einen Grillrostrahmenteil (48) positionsveränderbar angelenkt ist.

6. Vorrichtung nach wenigstens einem der vorangegangenen Ansprüche,
**dadurch gekennzeichnet, dass**
die Abluftöffnung (10) als horizontal angeordneter Langschlitz ausgebildet ist.

7. Vorrichtung nach Anspruch 6,
**dadurch gekennzeichnet, dass**
auf und/oder zumindest teilweise in der Abluftöffnung (10) wenigstens ein Kaminabschnitt (32) angeordnet ist.

8. Vorrichtung nach Anspruch 6,
**dadurch gekennzeichnet, dass**
der Kaminabschnitt (32) nach oben gerichtete, zumindest teilweise gekrümmt ausgebildete Kanten (40) aufweist.

9. Vorrichtung nach Anspruch 6,
**dadurch gekennzeichnet, dass**
der Kaminabschnitt weiterhin eine Unterseite aufweist, welche den beim Grillvorgang eingeführten Grillrostrahmenteil (48) zumindest teilweise untergreift.

10. Vorrichtung nach Anspruch 1,
**dadurch gekennzeichnet, dass**
diese als Moduleinheit ausgebildet ist.

11. Vorrichtung nach wenigstens einem der vorangegangenen Ansprüche,
**dadurch gekennzeichnet, dass**
diese weiterhin wenigstens eine Steuereinheit aufweist.

12. System zum Grillen von Grillgut aufweisend wenigstens zwei aneinander angeordnete Vorrichtungen (1) nach wenigstens einem der vorangegangenen Ansprüche.

## Claims

1. Apparatus (1) for grilling food and at least having a housing (2) for receiving the food, wherein the housing encompasses at least one grilling space, wherein the housing also has at least two through-passage openings (10; 12) and the first through-passage opening (10) is designed in the form of an outgoing-air opening and the food can be fed to the grilling space (8) through the second through-passage opening (12), wherein the housing (2) has at least two heat sources (32), which are intended for heating the food and are arranged essentially vertically,
**characterized in that** at least one heat source (32) is designed such that it can be changed in position in relation to the food and/or in relation to the food-receiving device (14),
and **in that** the at least one heat source (32) is arranged on the housing (2) such that it can be altered in position by way of at least one scissors-mechanism framework (34) .

2. Apparatus according to the preceding claim,
**characterized in that**
the apparatus also has at least one food-receiving device (14), which holds the food during the grilling process.

3. Apparatus according to at least one of the preceding claims,
**characterized in that**
the food is arranged in the vertical position during the grilling process.

4. Apparatus according to at least one of the preceding claims,
**characterized in that**
the food-receiving device (14) has at least one grill grate (44), advantageously at least two grill grates (44), articulated in a position-alterable manner on at least one grill-grate frame part (48).

5. Apparatus according to at least one of the preceding claims,
**characterized in that**
the at least one grill grate (44) is articulated in a position-alterable manner on at least one grill-grate frame part (48) by way of tensioning elements (46).

6. Apparatus according to at least one of the preceding claims,
**characterized in that**
the outgoing-air opening (10) is designed in the form of a horizontally arranged longitudinal slot.

7. Apparatus according to Claim 6,
**characterized in that**
at least one chimney portion (32) is arranged on and/or at least to some extent in the outgoing-air opening (10).

8. Apparatus according to Claim 6,
**characterized in that**
the chimney portion (32) has upwardly directed, at least partially curved edges (40).

9. Apparatus according to Claim 6,
**characterized in that**
the chimney portion also has an underside which at least partially engages below the grill-grate frame part (48) introduced therein during the grilling process.

10. Apparatus according to Claim 1,
**characterized in that**
the apparatus is designed in the form of a modular unit.

11. Apparatus according to at least one of the preceding claims,
**characterized in that**
the apparatus also has at least one control unit.

12. System for grilling food and having at least two apparatuses (1) according to at least one of the preceding claims arranged one on the other.

## Revendications

1. Dispositif (1) destiné à griller des grillades, ledit dispositif comportant au moins un boîtier (2) destiné à contenir les grillades, le boîtier s'étendant autour d'au moins un espace de gril, le boîtier comportant en outre au moins deux ouvertures de passage (10 ; 12) et la première ouverture de passage (10) étant conçue comme une ouverture d'évacuation d'air et les grillades pouvant être amenées à l'espace de gril (8) par la deuxième ouverture de passage (12), le boîtier (2) comportant au moins deux sources de chaleur (32), disposées sensiblement verticalement, afin de chauffer les grillades,
**caractérisé en ce qu'**au moins une source de chaleur (32) est conçue pour pouvoir modifier sa position par rapport aux grillades et/ou par rapport au module de réception de grillades (14), et **en ce que** l'au moins une source de chaleur (32) est disposée sur le boîtier (2) de manière variable en position avec au moins un cadre à ciseaux (34).

2. Dispositif selon la revendication précédente, **caractérisé en ce que** ledit dispositif comporte en outre au moins un module de réception de grillades (14) qui maintient les grillades pendant le processus de grillage.

3. Dispositif selon l'une au moins des revendications précédentes, **caractérisé en ce que** les grillades sont disposées en position verticale pendant le processus de grillage.

4. Dispositif selon l'une au moins des revendications précédentes, **caractérisé en ce que** le module de réception de grillades (14) comporte au moins une grille (44), avantageusement au moins deux grilles (44), qui est articulée de manière modifiable en position sur au moins une partie de cadre de grille (48) .

5. Dispositif selon l'une au moins des revendications précédentes, **caractérisé en ce que** l'au moins une grille (44) est reliée de manière articulée et variable en position à des éléments de serrage (46) sur au moins une partie de cadre de grille (48) .

6. Dispositif selon l'une au moins des revendications précédentes, **caractérisé en ce que** l'ouverture d'évacuation d'air (10) est réalisée sous la forme d'une fente allongée disposée horizontalement.

7. Dispositif selon la revendication 6, **caractérisé en ce qu'**au moins une portion formant cheminée (32) est disposée sur et/ou au moins partiellement dans l'ouverture d'évacuation d'air (10).

8. Dispositif selon la revendication 6, **caractérisé en ce que** la portion formant cheminée (32) comporte des bords (40) dirigés vers le haut, au moins partiellement incurvés.

9. Dispositif selon la revendication 6, **caractérisé en ce que** la portion formant cheminée comporte en outre une face inférieure qui s'engage au moins partiellement sous la partie de cadre de grille (48) insérée lors du processus de grillage.

10. Dispositif selon la revendication 1, **caractérisé en ce que** ledit dispositif est conçu comme une unité modulaire.

11. Dispositif selon l'une au moins des revendications précédentes, **caractérisé en ce que** ledit dispositif comporte également au moins une unité de commande.

12. Système destiné à griller des grillades, ledit système comprenant au moins deux dispositifs (1) selon l'une au moins des revendications précédentes qui sont disposés l'un à côté de l'autre.
